# EUROPÄISCHE PATENTSCHRIFT

(11) **EP 0 890 531 B1**
(45) Veröffentlichungstag und Bekanntmachung des Hinweises auf die Patenterteilung: **17.10.2001**
(21) Anmeldenummer: 98111387.1
(22) Anmeldetag: 20.06.1998
(51) Int. Cl.: B65G 1/00, B65G 1/14

(54) **Stapelsäule zum Lagern von Lagergütern**
Stacking column for storing products
Colonne de stockage pour marchandises

(30) Priorität: 09.07.1997 DE 19729444
(43) Veröffentlichungstag der Anmeldung: 13.01.1999
(73) Patentinhaber: MTS Maschinenbau GmbH, 88512 Mengen (DE)
(72) Erfinder: Schoeller, Heinz, 78239 Rielasingen/Worblingen (DE)
(74) Vertreter: Weiss, Peter, Dr. rer. nat.

(56) Entgegenhaltungen:
- EP-A- 0 267 178
- DE-A- 3 807 663
- DE-A- 3 811 310
- DE-A- 4 020 864
- DE-C- 3 536 251
- US-A- 4 712 691

## Beschreibung

Die vorliegende Erfindung betrifft eine Stapelsäule zum Lagern von Lagergütern über- oder nebeneinander auf Klinken, welche ein Anschlag- bzw. Auflageteil für das Lagergut aufweisen und zumindest einer Seitenwange zugeordnet sind, wobei der Klinke eine Klemmklinke zugeordnet und die Klinke in ihrer Arbeitsstellung festlegbar ist und die Klinke anderenends des Anschlag-bzw. Auflageteils ein Schwenkteil aufweist, welches in Arbeitsstellung der Klinke in eine Rasteinrichtung einfährt.

Stapelsäulen sind in vielfältiger Form und Ausführung bekannt und auf dem Markt. Verwendet werden Stapelsäulen vor allem bei der Herstellung von Karosserieteilen in der Automobilindustrie. Die entsprechenden Karosserieteile werden über Roboter aus den Pressen genommen und vor einer Weiterverarbeitung in Stapelsäulen zwischengelagert. In der Regel sind vier Stapelsäulen im Rechteck aufgestellt. Jede Stapelsäule besitzt eine Vielzahl von Klinken, die übereinander angeordnet sind. Eine erste Klinke befindet sich in Bereitschaftsstellung. Wird ein Lagergut auf diese Klinke aufgelegt, schwenkt die Klinke in Arbeitsstellung und nimmt dabei eine nachfolgende Klinke mit, die auf diese Weise in Bereitschaftsstellung gelangt. Eine derartige Stapelsäule ist beispielsweise aus der DE 38 11 310 C1 bekannt.

Stapelsäulen werden aber auch zur horizontalen Lagerung von Lagergütern verwendet, wie dies beispielsweise in der DE 40 20 864 A1 beschrieben ist. Die Funktionsweise dieser horizontalen Stapelsäulen ähnelt derjenigen der vertikalen Stapelsäulen.

Vor allem bei horizontalen Stapelsäulen taucht das Problem auf, dass das Lagergut im Lagerzustand kippen kann. Dies ist in vielen Fällen sehr unerwünscht, da es nicht nur zum Beschädigen des Lagergutes kommen kann, sondern auch zu einem unabsichtlichen Verstellen der Klinken.

Eine Stapelsäule der o. g. Art ist aus der DE 38 07 663 A1 bekannt. Dort ist der Klinke eine Klemmklinke zugeordnet, wobei die Klemmklinke gegenüber der Klinke um eine Drehachse dreht. Die Klinke selbst lagert an einem Zapfen, wobei dieser Zapfen ein Langloch durchsetzt. Zum Festlegen der Klinke in der Arbeitsstellung muss diese verschoben werden, so dass ein Positionierstift in eine Aussparung einläuft. Durch dieses Verschieben der gesamten Klinke ist es heute sehr schwer, die exakte Lage des Lagergutes zu bestimmen, was aber beim Einsatz eines Entnahmeroboters unumgänglich ist.

Der vorliegenden Erfindung liegt die Aufgabe zugrunde, eine Stapelsäule der oben genannten Art zu schaffen, bei der eine Führung der beiden Klinken wesentlich vereinfacht und ein Festlegen der Klinke in exakt vorbestimmte Endlagen möglich ist.

Zur Lösung dieser Aufgabe führt, dass die Rasteinrichtung einen Schwenkhebel aufweist, der mit einer Stirnkante in Raststellung von einem Anschlag einen Abstand einhält, in dem das Schwenkteil der Klinke aufgenommen ist.

Das bedeutet, dass das Schwenkteil der Klinke den Schwenkhebel zumindest teilweise überfährt und wegdrückt, wobei der Schwenkhebel nach dem Überfahren seiner Stirnkante in seine Ausgangslage zurückschwenken kann. Dies geschieht dadurch, dass der Schwenkhebel anderenends der Stirnkante mit einem Gewicht belastet ist.

Das Lösen der Rasteinrichtung geschieht der Einfachheit halber dadurch, dass ein anderes Element die Schwenkbewegung des Schwenkhebels hervorruft. In einem einfachen Ausführungsbeispiel geschieht dies durch ein Druckelement, welches auf einen Teil des Schwenkhebels drückt und diesen um seine Achse schwenkt. Bevorzugt ist das Druckelement an einer Schiene angeordnet, so dass eine Mehrzahl von Druckelementen eine Mehrzahl von Schwenkhebeln bedienen kann.

Die Klemmklinke sollte bevorzugt gegenüber der Klinke selbst bewegbar sein, so dass sie ebenfalls von einer Ruhelage in eine Bereitschaftstellung gelangen kann. Allerdings sollte sie danach zusammen mit der Klinke in eine Arbeitsstellung bewegbar sein. Dies geschieht dadurch, dass die Klemmklinke an der Drehachse der Klinke angeordnet ist, wobei jedoch ihr Schwenkbereich begrenzt ist.

Da üblicherweise an einer Stapelsäule eine Vielzahl von Klinken vorgesehen ist, sollten diese in Abhängigkeit voneinander bewegt werden können. Hierzu sind die Klinken untereinander mit einem Schubstreifen verbunden, wobei die Verbindung exzentrisch zur Schwenkachse der Klinken erfolgt. Im Stand der Technik gibt es eine Vielzahl von Beispielen, wie Klinken von Stapelsäulen von einer Ruhestellung in eine Bereitschaftsstellung und von einer Bereitschaftsstellung in eine Arbeitsstellung gelangen. Deshalb wird auf eine nähere Beschreibung verzichtet.

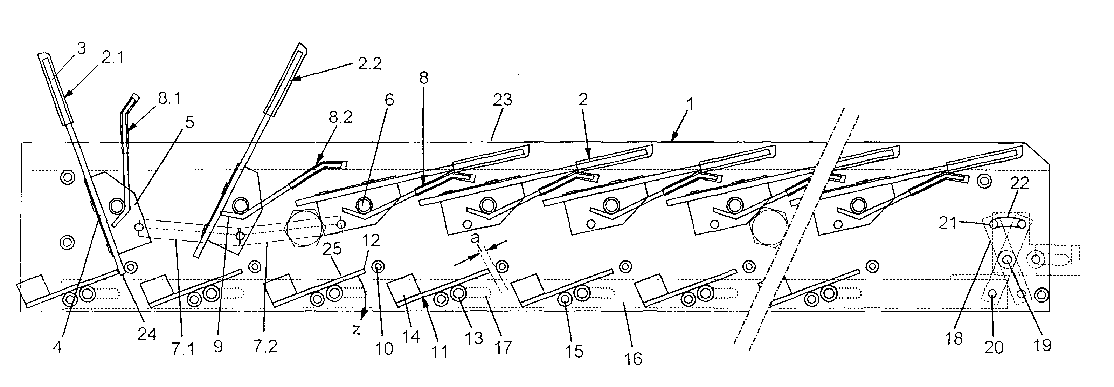

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine Draufsicht auf eine geöffnete Stapelsäule. Diese weist zumindest eine Seitenwange 1 auf, wobei in der Regel dazu noch eine zweite Seitenwange vorgesehen ist, die jedoch im vorliegenden Ausführungsbeispiel nicht gezeigt ist. Die andere Seitenwange liegt parallel und beabstandet zu der Seitenwange 1. Bevorzugt sind beide Seitenwangen identisch ausgebildet. Im vorliegenden Fall wird die Seitenwange 1 liegend gezeigt, es versteht sich von selbst, dass sie auch stehend zur Bildung einer vertikalen Stapelsäule angeordnet sein kann.

In der Stapelsäule lagern an der Seitenwange 1 Klinken 2, welche der Halterung von nicht näher gezeigten Lagergütern dienen. Jede Klinke 2 besteht aus einem Anschlag- bzw. Auflageteil 3 und einem Schwenkteil 4. Am Schwenkteil 4 ist zumindest eine Lasche 5 vorgesehen, welche mit einer Drehachse 6 verbunden ist. Die Klinke 2 kann um diese Drehachse 6 von einer Ruhelage in eine Bereitschaftsstellung und von einer Bereitschaftsstellung in eine Arbeitsstellung geschwenkt werden. Damit dies in Abhängigkeit der einzelnen Klinken untereinander erfolgt, sind die Klinken untereinander mit jeweils einem Schubstreifen 7 verbunden, wobei in dem gezeigten Ausführungsbeispiel nur zwei Schubstreifen 7 angedeutet sind.

Erfindungsgemäss ist an der Drehachse 6 noch eine Klemmklinke 8 angeordnet. Diese Klemmklinke 8 ist im vorliegenden Ausführungsbeispiel S-förmig gekrümmt ausgebildet und besitzt einen Stützfuss 9, welcher in Bereitschaftsstellung der Klinke 2.1 an der Unterseite des Schwenkteiles 4 anschlägt, so dass hierdurch sein Drehwinkel um die Drehachse 6 begrenzt ist.

Im Schwenkbereich des Schwenkteiles 4 ist ferner an der Seitenwange 1 ein Anschlag 10 vorgesehen. Diesem Anschlag 10 ist ein Schwenkhebel 11 zugeordnet, der mit einer Stirnkante 12 einen Abstand a von dem Anschlag 10 einhält. Andernends einer Achse 13, um die der Schwenkhebel 11 dreht, ist der Schwenkhebel 11 mit einem Gewicht 14 belastet, welches den Schwenkhebel 11 gegen eine neben der Achse 13 angeordnete Druckrolle 15 hält.

Die Druckrolle 15 ist an einer Schiene 16 vorgesehen und in Richtung x verschiebbar. Dabei wird die Schiene 16 durch die Achse 13 geführt, welche in ein Langloch 17 eingreift.

Am Ende der Schiene 16 ist ein Stellhebel 18 vorgesehen, der einends einer Drehachse 19 über ein Gelenk 20 mit der Schiene 16 verbunden ist, wobei seine Schwenkbewegung durch einen andernends des Gelenks 20 vorgesehenen Bolzen 21, der in ein nierenförmiges Langloch 22 eingreift, begrenzt wird.

Die Funktionsweise der vorliegenden Erfindung ist folgende:

Beim Erstgebrauch befinde sich ausser der Klinke 2.1 sämtliche anderen Klinken in Ruhelage. Dabei verschwindet die Klinke 2.2 und auch die ihr zugeordnete Klemmklinke 8.2 unter einer Oberkante 23 der Seitenwange 1. Die Länge des Schubstreifens 7.1 ist dabei jedoch so ausgestaltet, dass sich die erste Klinke 2.1 in Bereitschaftsstellung befindet, wie dies für die Klinke 2.2 angedeutet ist. Dabei ragt das Anschlag- bzw. Auflageteil 3 der Klinke 2.1 über die Oberkante 23 der Seitenwange 1 hervor, die Klemmklinke 8.1 befindet sich dagegen noch unterhalb der Oberkante 23, wie dies für die Klemmklinke 8.2 dargestellt ist.

Nunmehr wird ein Lagergut in diese Stapelsäule eingesetzt, wobei in der Regel vier Stapelsäulen im Rechteck angeordnet sind, sofern die Stapelsäulen vertikal stehen. Werden sie als horizontale Stapelsäulen verwendet, so genügen zwei etwa parallel zueinander angeordnete Stapelsäulen.

Beim Einschieben des Lagergutes wird die Klinke 2.1 in die in der Figur gezeigten Arbeisstellung geschwenkt, wobei das Lagergut an dem Anschlag- bzw. Auflageteil 3 anschlägt und die gesamte Klinke 2.1 um die Schwenkachse 6 schwenkt. Dabei taucht auch die Klemmklinke 8.1 aus der Seitenwange 1 auf und hintergreift das Lagergut, da ein Schwenkweg der Klemmklinke 8.1 durch ein Anschlagen des Stützfusses 9 an dem Schwenkteil 4 der Klinke 2.1 begrenzt ist. Das Lagergut wird so zwischen der Klemmklinke 8.1 und dem Anschlag- bzw. Auflageteil 3 gehalten.

Beim Schwenken in die Arbeitsstellung trifft das Schwenkteil 4 der Klinke 2.1 mit seiner Stirnkante 24 auf den Schwenkhebel 11 und fährt auf der Oberfläche 25 entlang, wobei der Schwenkhebel 11 in Richtung z schwenkt. Dabei überfährt die Stirnkante 24 des Schwenkteils 4 die Stirnkante 12 des Schwenkhebels 11 und fährt in den Abstand a ein. Der Schwenkhebel 11 schwenkt nun unter dem Druck des Gewichtes 14 wieder in seine Ausgangslage zurück, so dass das Schwenkteil 4 zwischen dem Anschlag 10 und der Stirnkante 12 gehalten ist. Hierdurch ist die Klinke 2.1 verriegelt.

Bei der Schwenkbewegung der Klinke 2.1 in die Arbeitsstellung nimmt die Klinke 2.1 über den Schubstreifen 7.1 die Klinke 2.2 aus ihrer Ruhelage in eine Bereitschaftsstellung mit. Das nächste Lagergut, welches nun in die Stapelsäulen eingebracht wird, drückt auf das Anschlag- bzw. Auflageteil der Klinke 2.2 und bringt so die Klinke 2.2 in Arbeitsstellung, wobei sich der oben erwähnte Bewegungsablauf wiederholt.

In einer Stapelsäule ist eine Vielzahl von Klinken und damit auch eine Vielzahl von Schwenkhebeln 11 vorgesehen. Damit bevorzugt eine gemeinsame Entriegelung der Klinken 2 erfolgen kann, ist jedem Schwenkhebel 11 eine Druckrolle 15 an einer Schiene 16 zugeordnet. Wird die Schiene 16, die mit Langlöchern an den Achsen 13 geführt ist, in Richtung x bewegt, drücken die Druckrollen 15 auf den Schwenkhebel 11, so dass dieser in Richtung z geschwenkt wird, und das Schwenkteil 4 der Klinke 2 freigegeben wird.

Damit sowohl der Verriegelungs- als auch der Entriegelungsvorgang möglichst effizient abläuft, dürfte es sich als ratsam erweisen, wenn der Schwenkhebel in Riegellage in etwa senkrecht zu der Klinke 2 bzw. dem Schwenkteil 4 der Klinke 2 steht.

Bei einer vertikalen Stapelsäule aber, wo erwünscht, auch bei einer horizontalen Stapelsäule kann anstelle oder zusätzlich zu dem Gewicht 14 vorgesehen sein, dass der Schwenkhebel 11 federbelastet ist. Beispielsweise kann eine Torsionsfeder an der Schwenkachse 13 vorgesehen sein.

## Patentansprüche

1. Stapelsäule zum Lagern von Lagergütern über- oder nebeneinander auf Klinken (2), welche ein Anschlag- bzw. Auflageteil (3) für das Lagergut aufweisen und zumindest einer Seitenwange (1) zugeordnet sind, wobei der Klinke (2) eine Klemmklinke (8) zugeordnet und die Klinke (2) in ihrer Arbeitsstellung festlegbar ist und die Klinke (2) anderenends des Anschlag- bzw. Auflageteils (3) ein Schwenkteil (4) aufweist, welches in Arbeitsstellung der Klinke (2) in eine Rasteinrichtung einfährt.
**dadurch gekennzeichnet,**
**dass** die Rasteinrichtung einen Schwenkhebel (11) aufweist, der mit einer Stirnkante (12) in Raststellung von einem Anschlag (10) einen Abstand (a) einhält, in dem das Schwenkteil (4) der Klinke (2) aufgenommen ist.

2. Stapelsäule nach Anspruch 1, **dadurch gekennzeichnet, dass** der Schwenkhebel (11) an einer Achse (13) gelagert ist, wobei einerseits der Achse (13) die Stirnkante (12) und andererseits auf dem Schwenkhebel (11) ein Gewicht (14) vorgesehen ist.

3. Stapelsäule nach Anspruch 2, **dadurch gekennzeichnet, dass** dem Schwenkhebel (11) ein Druckelement (15) zum Schwenken des Schwenkhebels (11) um die Achse (13) zugeordnet ist.

4. Stapelsäule nach Anspruch 3, **dadurch gekennzeichnet, dass** das Druckelement (15) an einer Schiene (16) angeordnet ist.

5. Stapelsäule nach Anspruch 4, **dadurch gekennzeichnet, dass** die Achse (13) des Schwenkhebels (11) ein Langloch (17) in der Schiene (16) durchsetzt.

6. Stapelsäule nach Anspruch 4 oder 5, **dadurch gekennzeichnet, dass** die Schiene (16) endwärtig mit einem Stellhebel (18) verbunden ist, der einends einer Drehachse (19) gelenkig mit der Schiene (16) verbunden ist und anderenends mit einem Bolzen (21) in einem nierenförmigen Langloch (22) geführt ist.

7. Stapelsäule nach wenigstens einem der Ansprüche 1 bis 6, **dadurch gekennzeichnet, dass** die Klinke und die Klemmklinke (8) an der gleichen Drehachse (6) angeordnet sind.

8. Stapelsäule nach Anspruch 7, **dadurch gekennzeichnet, dass** die Klemmklinke (8) einerseits der Drehachse (6) ein Klemmteil und andererseits einen Stützfuss(9) aufweist.

9. Stapelsäule nach Anspruch 8, **dadurch gekennzeichnet, dass** sich der Stützfuss (9) in Gebrauchsalage der Klemmklinke (8) gegen die Klinke (2) abstützt.

## Claims

1. Stacking column for storing articles one above the other or one beside the other on ratchet elements (2), which have a stop or supporting part (3) for the articles and are assigned to at least one side wall (1), it being the case that the ratchet element (2) is assigned a clamping ratchet (8) and the ratchet element (2) can be secured in its operating position and, at the end opposite the stop or supporting part (3), the ratchet element (2) has a pivot part (4) which, in the operating position of the ratchet element (2), moves into a latching device, **characterized in that** the latching device has a pivot lever (11) which in the latching position, by way of an end edge (12), maintains a spacing (a) from a stop (10), the pivot part (4) of the ratchet element (2) being accommodated in said spacing.

2. Stacking column according to Claim 1, **characterized in that** the pivot lever (11) is mounted on a pin (13), the end edge (12) being provided on one side of the pin (13) and a weight (14) being provided on the pivot lever (11) on the other side.

3. Stacking column according to Claim 2, **characterized in that** the pivot lever (11) is assigned a pressure-exerting element (15) for the purpose of pivoting the pivot lever (11) about the pin (13).

4. Stacking column according to Claim 3, **characterized in that** the pressure-exerting element (15) is arranged on a rail (16).

5. Stacking column according to Claim 4, **characterized in that** the pin (13) of the pivot lever (11) passes through a slot (17) in the rail (16).

6. Stacking column according to Claim 4 or 5, **characterized in that**, at the end, the rail (16) is connected to an actuating lever (18) which, on one side of a pivot pin (19), is connected to the rail (16) in an articulated manner and, on the other side, is guided by a bolt (21) in a kidney-shaped slot (22).

7. Stacking column according to at least one of Claims 1 to 6, **characterized in that** the ratchet element and the clamping ratchet (8) are arranged on the same pivot pin (6).

8. Stacking column according to Claim 7, **characterized in that** the clamping ratchet (8) has, on one side of the pivot pin (6), a clamping part and, on the other side, a supporting foot (9) .

9. Stacking column according to Claim 8, **characterized in that**, in the use position of the clamping ratchet (8), the supporting foot (9) is supported against the ratchet element (2).

## Revendications

1. Colonne d'empilement pour l'entreposage de produits entreposés, les uns au-dessus des autres ou les uns à côté des autres sur des cliquets (2) qui présentent une partie de butée ou de pose (3) pour le produit à entreposer et qui sont associés à au moins une joue latérale (1), un cliquet de serrage (8) étant associé au cliquet (2), le cliquet (2) pouvant être immobilisé dans sa position de travail et le cliquet (2) présentant à l'extrémité opposée à la partie de butée ou de pose (3) une partie pivotante (4) qui s'engage dans un dispositif d'encliquetage lorsque le cliquet (2) est en position de travail,
**caractérisée en ce que**
le dispositif d'encliquetage présente un levier pivotant (11) qui, dans la position d'encliquetage, maintient par un bord frontal (12) une distance (a) par rapport à une butée (10) et dans lequel la partie pivotante (4) du cliquet (2) est reçue.

2. Colonne d'empilement selon la revendication 1, **caractérisée en ce que** le levier pivotant (11) est monté sur un axe (13), le côté frontal (12) étant prévu d'un côté de l'axe (13) et un poids (14) étant prévu de l'autre côté sur le levier pivotant (11) .

3. Colonne d'empilement selon la revendication 2, **caractérisée en ce qu'**un élément de poussée (15) pour faire pivoter le levier pivotant (11) autour de l'axe (13) est associé au levier pivotant (11).

4. Colonne d'empilement selon la revendication 3, **caractérisée en ce que** l'élément de poussée (15) est disposé sur un rail (16).

5. Colonne d'empilement selon la revendication 4, **caractérisée en ce que** l'axe (13) du levier pivotant (11) traverse un trou oblong (17) ménagé dans le rail (16).

6. Colonne d'empilement selon la revendication 4 ou 5, **caractérisée en ce que** le rail (16) est relié à une extrémité à un levier d'ajustement (18) qui est relié de manière articulée au rail (16) à une extrémité d'un axe de rotation (19) et qui, à son autre extrémité, est guidé par un goujon (21) dans un trou oblong (22) en forme de haricot.

7. Colonne d'empilement selon au moins l'une des revendications 1 à 6, **caractérisée en ce que** le cliquet et le cliquet de serrage (8) sont disposés sur le même axe de rotation (6).

8. Colonne d'empilement selon la revendication 7, **caractérisée en ce que** le cliquet de serrage (8) présente d'un côté de l'axe de rotation (6) une pièce de serrage et de l'autre côté un pied d'appui (9).

9. Colonne d'empilement selon la revendication 8, **caractérisée en ce que** le pied d'appui (9) s'appuie contre le cliquet (2) lorsque le cliquet de serrage (8) est en position d'utilisation.
